# EUROPÄISCHE PATENTSCHRIFT

(11) **EP 1 114 495 B1**
(45) Veröffentlichungstag und Bekanntmachung des Hinweises auf die Patenterteilung: **06.11.2002**
(21) Anmeldenummer: 99942763.6
(22) Anmeldetag: 01.07.1999
(51) Int. Cl.: H02G 15/013

(54) **VERBINDUNGSELEMENT ZUR ÜBERBRÜCKUNG DER TRENNSTELLE EINER GETEILTEN DICHTUNG BEI EINER KABELGARNITUR**
JOINING ELEMENT FOR BRIDGING THE SEPARATING AREA OF A DIVIDED SEAL IN CABLE FITTINGS
ELEMENT D'ASSEMBLAGE POUR PONTER LA ZONE DE DIVISION D'UN JOINT COUPE DANS UNE GARNITURE DE CABLE

(30) Priorität: 16.09.1998 DE 19842422
(43) Veröffentlichungstag der Anmeldung: 11.07.2001
(73) Patentinhaber: CCS Technology, Inc., Wilmington, DE 19803 (US)
(72) Erfinder: MÜLLER, Thorsten, D-58708 Menden (DE); ZIMMER, Rainer, D-58579 Schalksmühle (DE)
(74) Vertreter: Sturm, Christoph, Dipl.-Ing.
(86) Internationale Anmeldenummer: DE9901945
(87) Internationale Veröffentlichungsnummer: WO00016458

(56) Entgegenhaltungen:
- EP-A- 0 417 608
- EP-A- 0 844 718
- EP-B- 0 443 118
- JP-A- 1 170 309
- PATENT ABSTRACTS OF JAPAN Bd. 013, Nr. 444 (E-828) 05 Oktober 1989 & JP 01 170 309 A (FUJIKURA LTD) 05 Juli 1989

## Beschreibung

Die Erfindung betrifft eine Dichtung für Kabelgarnituren nach dem Oberbegriff des Anspruchs 1, wobei mittels eines Verbindungselements die Trennstelle einer geteilten Dichtung bei einer Kabelgarnitur überbrückt wird.

Aus der Europäischen Patentschrift 0 443 118 Bl ist ein geteilter Dichtungsring aus Kunststoff für Dichtungskörper bei Kabelgarnituren bekannt. Dieser geteilte Dichtungsring besteht aus einem elastischen Schlauch, der an den Dichtungsenden ein die Trennstelle überbrückendes Verbindungsglied aufweist, das im Inneren des Dichtungsringes angeordnet ist. Das Verbindungsglied wird aus zwei korrespondierenden, ineinander rastenden Kupplungsgliedern gebildet, die im Inneren des Dichtungsringes zurückversetzt sind. Beim Zusammenfügen werden die Teilungsflächen des Dichtungsringes zusammengepreßt; wobei hierzu ein fester Sitz der Kupplungsglieder im Inneren des Dichtungsringes gewährleistet sein muß.

Aus der JP,A,1 170 309 (siehe auch zugehörigen Patent Abstract, vol. 13, no. 444, (E-828), 05-10-1989, &JP,A,1 170 309 (FUJIKURA) ist eine Dichtung für Kabelgarnituren gemäß dem Oberbegriff des Patentanspruchs 1 bekannt.

Die Aufgabe vorliegender Erfindung besteht darin, eine Dichtung für Kabelgarnituren zu schaffen, die einfach montierbar ist und die eine zuverlässige Dichtungswirkung hat.

Die gestellte Aufgabe wird gemäß der Erfindung mit Hilfe einer Dichtung für Kabelgarnituren der eingangs erläuterten Art dadurch gelöst, daß der Durchmesser der Rohrelemente gleich dem Durchmesser der Aufnahmelöcher ist, daß die Dichtungselementenden mittels des mit seinen Rohrelementen in die Aufnahmelöcher eingesetzten Fixierteils zueinander ausgerichtet und in einer auf Stoß zusammengefügten Position spielfrei fixiert sind, daß korrespondierende Rastelemente an den Zapfen und den Rohrelementen zum gegenseitigen Einrasten angeordnet sind, daß die Begrenzungswand der jeweiligen Längsvertiefung des Dichtungselements im Querschnitt bogenförmig ist, und daß sowohl die erste Verbindungsschiene als auch die zweite Verbindungsschiene im Querschnitt eine der jeweiligen Längsvertiefung zugewandte und der Bogenform derselben entsprechende Bogenform haben und mit ihrer Bogenform formschlüssig in die zugehörige Längsvertiefung eingesetzt sind.

Vorteilhafte Weiterbildungen der Erfindung sind in den abhängigen Ansprüchen beschrieben.

Der Vorteil an dem Verbindungselement gemäß der Erfindung gegenüber dem Stand der Technik besteht vor allem darin, daß keine Haftmittel für die Fixierung benötigt werden. Bei den verwendeten Dichtungselementen, die meist aus elastischen Kunststoffmaterialien, wie z.B. Silicon bestehen, ist es besonders schwierig, geeignete Haftmittel zu finden, die eine ausreichende Fixierung gewährleisten. Auch mechanische Klemmung ist bei elastischen Kunststoffmaterialien aufgrund der Flexibilität des Materials nur sehr schwierig möglich. Bei dem Verbindungselement gemäß der Erfindung ist die Fixierung der Dichtung an einer Trennstelle zwischen zwei Dichtungselementenden praktisch unabhängig vom verwendeten Dichtungsmaterial, da die Dichtungselementenden an der Trennstelle nur gegeneinander ausgerichtet und durch das Verbindungselement in der Lage fixiert werden. Dafür ist in jedem Dichtungselementende ein Aufnahmeloch für die Einführung von Rohrelementen und darin korrespondierend einrastenden Zapfen des Verbindungselementes eingebracht. Die Rohrelemente und Zapfen sind in dem durch die Lage der Aufnahmelöcher bestimmten Abständen auf Verbindungsschienen angeordnet, wobei die Verbindungsschienen die Trennstelle der Dichtung überbrücken. Bei der Montage des Verbindungselementes wird zunächst das Fixierteil des Verbindungselementes mit seinen Rohrelementen in die Aufnahmelöcher der Dichtungselementenden eingeführt, so daß dadurch die Ausrichtung und das gegenseitige Anliegen der Dichtungselementenden erfolgt ist. Die Verriegelung erfolgt dann durch das Einrasten des Verschlußteils, wobei die Zapfen des Verschlußteils in die Rohrelemente des Fixierteils spielfrei einrasten. Als Dichtungselemente werden bei Kabelgarnituren, insbesondere beim Einsatz von Ringdichtungen im Dichtungsbereich zwischen den Dichtungskörpern und einem Muffenrohr, Profildichtungen oder Runddichtungen verwendet. Diese Dichtungselemente können auch mit einem längs verlaufenden Hohlraum versehen sein, um die Elastizität des Dichtungselements zu erhöhen. Das Verbindungselement gemäß der Erfindung wird im Bereich der Trennstelle des Dichtungselements in den Dichtungselementenden versenkt angeordnet, z.B. in einer fortlaufenden Vertiefung einer Profildichtung oder in einer der Form des Verbindungselementes angepaßten Vertiefung, so daß das Verbindungselement nicht als Überstand in Erscheinung tritt. Bei besonders kritischen Trennstellen können auch zusätzlich zur Abdichtung geeignete und in der Kabelgarniturentechnik an sich bekannte Benetzungsmittel oder Klebemittel aufgebracht werden.

Die Erfindung wird nun anhand eines Ausführungsbeispiels in drei Figuren näher erläutert.
- Figur 1: zeigt die Einzelteile des Verbindungselementes.
- Figur 2: zeigt das Einsetzen des Verschlußteiles in das Fixierteil bei bereits ausgerichtetem Dichtungselement.
- Figur 3: zeigt die fertig montierte Trennstelle des Dichtungselements.

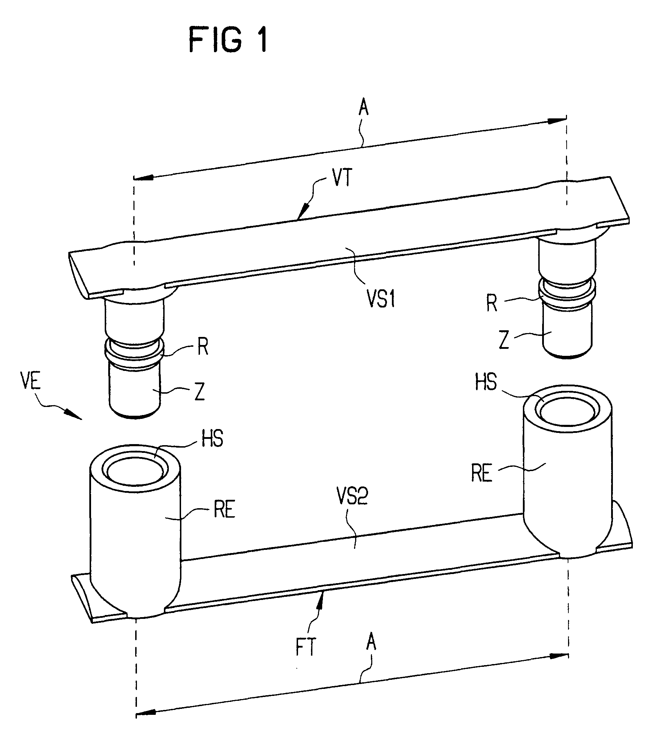

In Figur 1 ist das Verbindungselement VE im unverriegelten Zustand dargestellt. Es besteht aus dem Fixierteil FT mit zwei Rohrelementen RE als Rastelemente auf einer Verbindungsschiene VS2 und aus einem Verschlußteil VT mit zwei Zapfen Z als korrespondierende Rastelemente auf einer Verbindungsschiene VS1. Die Zapfen Z, wie auch die Rohrelemente RE sind jeweils in einem Abstand A voneinander entfernt auf der jeweiligen Verbindungsschiene VS1 bzw. VS2 angeordnet, wobei dieser Abstand A dem Abstand an zwei Aufnahmelöchern entspricht, die in den Dichtungselementenden des zusammenzufügenden Dichtungselement eingebracht sind. Der Durchmesser dieser Aufnahmelöcher in dem Dichtungselement entspricht den Außendurchmessern der Rohrelemente RE, die dort eingeführt werden. Nach der Einfügung der Dichtungselementenden ist die Dichtung auf Stoß zusammengefügt und die Dichtungselementenden sind in ihrer Position fixiert. Als oberer Abschluß der zusammengefügten Anordnung wird der Dichtungsteil VT aufgesetzt, wobei die Zapfen in den Rohrelementen RE einrasten. Die Einrastung erfolgt beispielsweise dadurch, daß sich die Zapfen Z mit Rastringen R beim Eintauchen ins Innere der Rohrelemente RE in einem Hinterschnitt HS spielfrei verhaken. Die Verbindungsschienen VS1 und VS2 sind so ausgebildet, daß sie sich beim Einsetzen in Vertiefungen des Dichtungselement möglichst gut anlegen. Bei diesem Ausführungsbeispiel weisen die zum Dichtungselement weisenden Flächen der Verbindungsschienen VS1 und VS2 eine bogenförmige Ausbildung auf, die der Form des Dichtungsprofils entspricht.

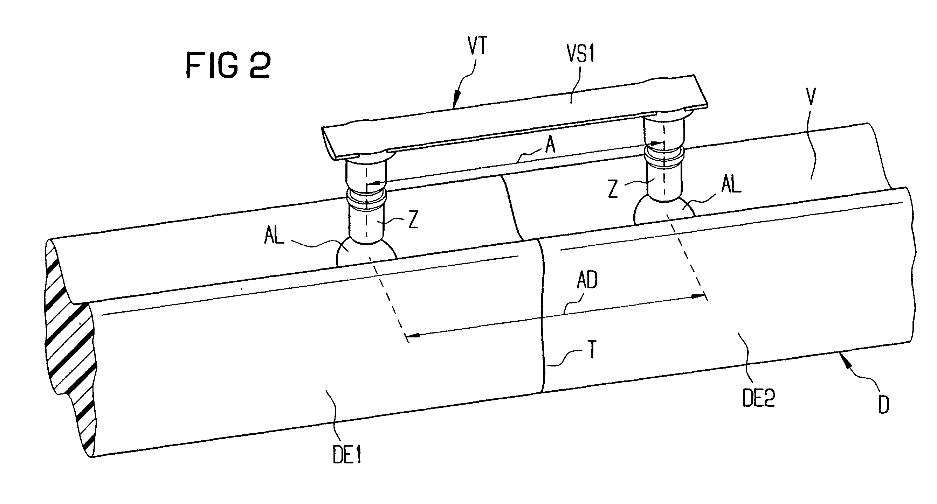

In Figur 2 ist der erste Montageschritt dargestellt, bei dem die Dichtungselementenden DE1 und DE2 des Dichtungselements D - in diesem Fall eine Profildichtung mit vollem Querschnitt - bereits durch den Einsatz des in den Aufnahmelöchern AL eingesetzten und hier nicht mehr sichtbaren Fixierteiles auf Stoß in der Trennstelle T zusammengefügt und in der Lage fixiert sind. Hier ist nochmals angedeutet, daß der Abstand AD dem Abstand A der Rohrelemente RE bzw. der Zapfen Z entspricht. Der Verschlußteil VT ist hier kurz vor seinem Einsatz in die Rohrelemente bzw. vor der Verriegelung der gesamten Vorrichtung dargestellt.

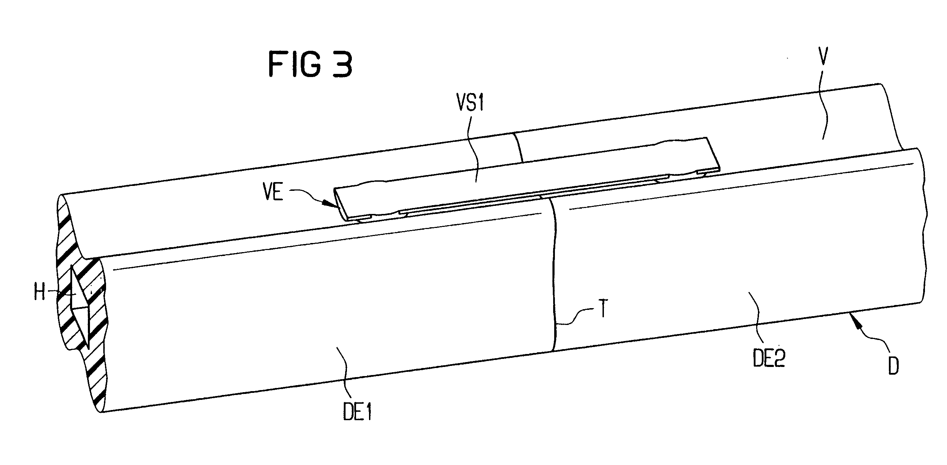

Figur 3 zeigt schließlich den Endzustand des Montagevorganges mit dem Verbindungselement VE, d.h. der Verschlußteil VT ist eingesenkt und verriegelt bzw. eingerastet und gewährleistet somit spielfreien Zusammenhalt der Dichtungselementenden DE1 und DE2 an der gemeinsamen Trennstelle T. Weiter ist erkennbar, daß der Verschlußteil VT in der Vertiefung V des Dichtungselements D eingelegt ist und nicht über das Dichtungsprofil hinausragt, so daß die später anliegende Dichtungsfläche nicht beeinträchtigt wird. Hier ist als Alternative angedeutet, daß z.B. ein Dichtungselement mit einem längs verlaufenden bzw. längs gestrecktem Hohlraum H verwendet ist.

## Patentansprüche

1. Dichtung für Kabelgarnituren mit einem langgestreckten, quergeteilten Dichtungselement (D), welches seiner Trennstelle zugeordnete Dichtungselementenden (DE1, DE2) aufweist und an zwei voneinander abgewandten Längsseiten mit jeweils einer sich in Längsrichtung des Dichtungselements (D) erstreckenden Längsvertiefung (V) versehen ist, die nach außen hin offen ist, und einem die Trennstelle überbrückenden Verbindungselement (VE), das aus einem Fixierteil (FT) mit zwei im Abstand (A) voneinander auf einer ersten Verbindungsschiene (VS2) angeordneten Rohrelementen (RE) und aus einem Verschlußteil (VT) mit im gleichen Abstand (A) auf einer zweiten Verbindungschiene (VS1) angeordneten Zapfen (Z) besteht, wobei das Fixierteil (FT) mittels des Verschlußteils (VT) an dem Dichtungselement (D) verriegelt ist, und wobei der Abstand (A) zwischen den Zapfen (Z) bzw. den Rohrelementen (RE) dem Abstand (AD) zwischen zwei Aufnahmelöchern (AL) in den Dichtungselementenden (DE1, DE2) des an der Trennstelle zusammengefügten Dichtungselements (D) entspricht, **dadurch gekennzeichnet, daß** der Durchmesser der Rohrelemente (RE) gleich dem Durchmesser der Aufnahmelöcher ist, daß die Dichtungselementenden (DE1, DE2) mittels des mit seinen Rohrelementen (RE) in die Aufnahmelöcher (AL) eingesetzten Fixierteils (FT) zueinander ausgerichtet und in einer auf Stoß zusammengefügten Position spielfrei fixiert sind, daß korrespondierende Rastelemente (R, HS) an den Zapfen (Z) und den Rohrelementen (RE) zum gegenseitigen Einrasten angeordnet sind, daß die Begrenzungswand der jeweiligen Längsvertiefung (V) des Dichtungselements (D) im Querschnitt bogenförmig ist, und daß sowohl die erste Verbindungsschiene (VS1) als auch die zweite Verbindungsschiene (VS2) im Querschnitt eine der jeweiligen Längsvertiefung (V) zugewandte und der Bogenform derselben entsprechende Bogenform haben und mit ihrer Bogenform formschlüssig in die zugehörige Längsvertiefung (V) eingesetzt sind.

2. Dichtung nach Anspruch 1,
**dadurch gekennzeichnet,**
**daß** die Rastelemente an den Zapfen (Z) als Ausformungen, insbesondere als Rastringe (R) ausgebildete sind.

3. Dichtung nach einem der vorhergehenden Ansprüche,
**dadurch gekennzeichnet,**
**daß** als Rastelement in den Rohrelementen (RE) ein Hinterschnitt (HS) ausgebildet ist.

4. Dichtung nach einem der Ansprüche 1 bis 3,
**dadurch gekennzeichnet,**
**daß** die Längsvertiefungen (V) in dem Dichtungselement (D) fortlaufend sind.

5. Dichtung nach einem der Ansprüche 1 bis 3, **dadurch gekennzeichnet,**
**daß** die Längsvertiefungen (V) in dem Dichtungselement (D) auf die Form der Verbindungsschienen (VS1, VS2) begrenzt sind.

6. Dichtung nach einem der vorhergehenden Ansprüche, **dadurch gekennzeichnet,**
**daß** das Dichtungselement (D) als Profildichtung ausgebildet ist.

7. Dichtung nach einem der Ansprüche 1 bis 5, **dadurch gekennzeichnet,**
**daß** das Dichtungselement (D) als Runddichtung ausgebildet ist.

8. Dichtung nach einem der vorhergehenden Ansprüche, **dadurch gekennzeichnet,**
**daß** das Dichtungselement (D) mit einem langgestreckten inneren Hohlraum (H) versehen ist.

9. Dichtung nach einem der vorhergehenden Ansprüche, **dadurch gekennzeichnet,**
**daß** das Dichtungselement (D) elastisch ist und vorzugsweise aus Silicon besteht.

10. Dichtung nach einem der vorhergehenden Ansprüche, **dadurch gekennzeichnet,**
**daß** ein Benetzungs- oder Klebemittel an den Dichtungselementenden (DE1, DE2) in der Trennstelle (T) aufgebracht ist.

## Claims

1. Seal for cable fittings, having an elongate, transversely divided sealing element (D), which has sealing-element ends (DE1, DE2) assigned to its separating location and is provided, on each of two longitudinal sides which are directed away from one another, with a longitudinal depression (V) which extends in the longitudinal direction of the sealing element (D) and is open in the outward direction, and having a connecting element (VE) which bridges the separating location and comprises a fixing part (FT), with two tube elements (RE) arranged at a distance (A) apart from one another on a first connecting rail (VS2), and a closure part (VT), with stubs (Z) arranged at the same distance (A) apart on a second connecting rail (VS1), the fixing part (FT) being locked on the sealing element (D) by means of the closure part (VT), and the distance (A) between the stubs (Z) and the tube elements (RE) corresponding to the distance (AD) between two accommodating holes (AL) in the sealing-element ends (DE1, DE2) of the sealing element (D), the constituent parts of which are joined together at the separating location, **characterized in that** the diameter of the tube elements (RE) is equal to the diameter of the accommodating holes, **in that**, by means of the fixing part (FT), which has its tube elements (RE) inserted into the accommodating holes (AL), the sealing-element ends (DE1, DE2) are aligned in relation to one another and fixed in a play-free manner in a position in which they are joined together with abutment, **in that** corresponding latching elements (R, HS) are arranged on the stubs (Z) and the tube elements (RE) for latching one in the other, **in that** the boundary wall of the respective longitudinal depression (V) of the sealing element (D) is of arcuate cross section, and **in that** both the first connecting rail (VS1) and the second connecting rail (VS2), in cross section, have an arcuate shape which is directed towards the respective longitudinal depression (V) and corresponds to the arcuate shape of the latter, and are inserted with a form fit, by way of their arcuate shape, into the associated longitudinal depression (V).

2. Seal according to Claim 1, **characterized in that** the latching elements on the stubs (Z) are designed as convex formations, in particular as latching rings (R).

3. Seal according to one of the preceding claims, **characterized in that** an undercut (HS) is formed as latching element in the tube elements (RE).

4. Seal according to one of Claims 1 to 3, **characterized in that** the longitudinal depressions (V) in the sealing element (D) are continuous.

5. Seal according to one of Claims 1 to 3, **characterized in that** the longitudinal depressions (V) in the sealing element (D) are restricted to the shape of the connecting rails (VS1, VS2).

6. Seal according to one of the preceding claims, **characterized in that** the sealing element (D) is designed as a profiled seal.

7. Seal according to one of Claims 1 to 5, **characterized in that** the sealing element (D) is designed as a round seal.

8. Seal according to one of the preceding claims, **characterized in that** the sealing element (D) is provided with an elongate inner cavity (H).

9. Seal according to one of the preceding claims, **characterized in that** the sealing element (D) is elastic and preferably consists of silicone.

10. Seal according to one of the preceding claims, **characterized in that** a wetting agent or adhesive is applied to the sealing-element ends (DE1, DE2) in the separating location (T).

## Revendications

1. Joint pour garnitures de câble comportant un élément de joint (D) divisé transversalement et s'étendant en longueur qui présente des extrémités d'élément de joint (DE1, DE2) affectées à son endroit de séparation et est pourvu d'un creux longitudinal (V) s'étendant à chaque fois dans le sens longitudinal de l'élément de joint (D) sur deux faces longitudinales opposées l'une à l'autre et ouvert vers l'extérieur et un élément de liaison (VE) en dérivation par rapport à l'endroit de séparation qui est constitué d'une pièce de fixation (FT) présentant 2 éléments tubulaires (RE) disposés à une distance (A) l'un de l'autre sur un premier rail de liaison (VS2) et d'une pièce de verrouillage (VT) présentant des tenons (Z) disposés à une même distance (A) sur un second rail de liaison (VS1), la pièce de fixation (FT) étant verrouillée au moyen de la pièce de verrouillage (VT) sur l'élément de joint (D) et la distance (A) entre les tenons (Z) ou selon le cas les éléments tubulaires (RE) correspond à la distance (AD) entre deux orifices de réception (AL) dans les extrémités d'élément de joint (DE1, DE2) de l'élément de joint (D) assemblé à l'endroit de séparation, **caractérisé en ce que** le diamètre des éléments tubulaires (RE) est égal au diamètre des orifices de réception, **en ce que** les extrémités d'élément de joint (DE1, DE2) sont alignées l'une sur l'autre au moyen de la pièce de fixation (FT) insérée dans les orifices de réception (AL), avec ses éléments tubulaires (RE) et sont fixées par choc sans jeu dans une position d'assemblage, **en ce que** des éléments d'encliquetage correspondants (R, HS) sont disposés sur les tenons (Z) et sur les éléments tubulaires (RE) pour encliquetage mutuel, **en ce que** la paroi de délimitation du creux longitudinal (V) concerné de l'élément de joint (D) est en section transversale arquée, et **en ce que** aussi bien le premier rail de liaison (VS1) que le second rail de liaison (VS2) ont en section transversale une forme arquée tournée vers le creux longitudinal (V) respectif et correspondant à la forme arquée de ce dernier, et sont insérés avec leur forme arquée dans le creux longitudinal (V) associé de façon à épouser sa forme.

2. Joint selon la revendication 1, **caractérisé en ce que** les éléments d'encliquetage sur les tenons (Z) sont conformés comme moulages, en particulier comme bagues d'encliquetage (R).

3. Joint selon l'une quelconque des revendications précédentes, **caractérisé en ce qu'**une contre-dépouille (HS) est conformée comme élément d'encliquetage dans les éléments tubulaires (RE).

4. Joint selon l'une quelconque des revendications 1 à 3, **caractérisé en ce que** les creux longitudinaux (V) dans l'élément de joint (D) sont continus.

5. Joint selon l'une quelconque des revendications 1 à 3, **caractérisé en ce que** les creux longitudinaux (V) dans l'élément de joint (D) sont délimités par la forme des rails de liaison (VS1, VS2).

6. Joint selon l'une quelconque des revendications précédentes, **caractérisé en ce que** l'élément de joint (D) est conformé en tant que joint profilé.

7. Joint selon l'une quelconque des revendications 1 à 5, **caractérisé en ce que** l'élément de joint (D) est conformé comme joint circulaire.

8. Joint selon l'une quelconque des revendications précédentes, **caractérisé en ce que** l'élément de joint (D) est pourvu d'une cavité interne (H) s'étendant en longueur.

9. Joint selon l'une quelconque des revendications précédentes, **caractérisé en ce que** l'élément de joint (D) est élastique et est constitué de préférence de silicone.

10. Joint selon l'une quelconque des revendications précédentes, **caractérisé en ce qu'**un mouillant ou un adhésif est appliqué sur les extrémités d'élément de joint (DE1, DE2) à l'endroit de séparation (T).
